# EUROPÄISCHE PATENTANMELDUNG

(11) **EP 3 770 704 A1**
(43) Veröffentlichungstag der Anmeldung: **27.01.2021**
(21) Anmeldenummer: 19188183.8
(22) Anmeldetag: 24.07.2019
(51) Int. Cl.: G05B 19/05, G06F 9/50, H04L 12/00

(54) **CLOUDBASIERTES DEZENTRALES AUTOMATISIERUNGSSYSTEM**

(71) Anmelder: Siemens Aktiengesellschaft, 80333 München (DE)
(72) Erfinder: Brehmer, Nadine, 91074 Herzogenaurach (DE); Gerstmaier, Alexej, 76287 Rheinstetten (DE); Jordan, Carsten, 90562 Heroldsberg (DE); Unkelbach, Michael, 91054 Buckenhof (DE)

(57) **Zusammenfassung**

Ein Automatisierungssystem für eine industrielle technische Anlage (A) weist mehrere virtuelle Controller (1, 2) auf, die miteinander kommunizieren. Ein Controller (1) ist in einer physikalischen Einrichtung (5) am Ort der Anlage (A) implementiert. Er nimmt Messdaten (M) der Anlage (A) entgegen, übermittelt die Messdaten (M) und/oder eigene interne Daten (I1) an den anderen Controller (2) und ermittelt anhand der Messdaten (M), seiner internen Daten (I1) und/oder interner Daten (I2) des anderen Controllers (2) einen Teil (C1) von Steuerdaten (C) für Aktoren (10) zum Beeinflussen der Anlage (A). Vom anderen Controller (2) nimmt er zumindest einen zweiten Teil (C2) der Steuerdaten (C) entgegen. Die Steuerdaten (C) gibt er an die Aktoren (10) aus. Der andere Controller (2) ist in einer Recheneinrichtung (6) implementiert. Er nimmt vom ersten Controller (1) - soweit übermittelt - die Messdaten (M) und/oder dessen interne Daten (I1) entgegen und ermittelt anhand dieser Daten (M, I1) und/oder seiner internen Daten (I2) einen zweiten Teil (C2) der Steuerdaten (C). Zumindest den zweiten Teil (C2) der Steuerdaten (C) übermittelt er an den ersten Controller (1). Die Controller (1, 2) arbeiten zum Ermitteln der Teile (C1, C2) der Steuerdaten (C) in Software erstellte Automatisierungsaufgaben (A1, A2) ab. Die Controller (1, 2) kommunizieren über ein Rechnernetz (WWW) miteinander. Sie sind insofern gleichartig ausgebildet, dass die Automatisierungsaufgaben (A1, A2) ohne Änderung der Automatisierungsaufgaben (A1, A2) von beiden Controllern (1, 2) abarbeitbar sind.

## Beschreibung

Die vorliegende Erfindung betrifft ein Automatisierungssystem für eine industrielle technische Anlage gemäß dem Oberbegriff des Patentanspruchs 1.

In der Prozessindustrie werden oftmals verteilte Steuerungssysteme verwendet, um eine industrielle technische Anlage und den mittels der industriellen technischen Anlage realisierten physikalischen, chemischen oder biologischen Prozess zu überwachen und zu steuern. Die Anlage und der hierdurch realisierte Prozess können prinzipiell beliebiger Natur sein. Beispielsweise kann es sich um ein Kraftwerk, um eine Energieverteilungseinrichtung, um eine Papiererzeugungsanlage, um eine Abfüllanlage, um eine Briefsortieranlage, um eine Chemieanlage oder um eine andere Anlage handeln.

Messdaten für beispielsweise Temperaturen, Drücke, Durchflüsse usw. werden über Sensoren erfasst und Controllern zugeführt. Das Zuführen zu den Controllern kann beispielsweise durch dedizierte Eingabeeinrichtungen oder dezentrale Peripherieeinheiten erfolgen. Es ist auch möglich, dass die Messdaten zwischen den Controllern ausgetauscht werden. Die Übermittlung erfolgt über echtzeitfähige Busse. Die Controller bestehen üblicherweise aus einer speziellen Hardware, in welche eine echtzeitfähige Steuersoftware eingebettet ist. Die Steuersoftware nimmt die Messdaten entgegen, führt die Automatisierungs- und Steueraufgaben durch und übermittelt die Steuerdaten für Aktoren, mittels derer die industrielle technische Anlage beeinflusst wird, an die Aktoren. Die Übermittlung an die Aktoren kann - wie zuvor das Zuführen der Messdaten - durch dedizierte Ausgabeeinrichtungen oder dezentrale Peripherieeinheiten erfolgen. Es ist auch möglich, dass die Steuerdaten zwischen den Controllern ausgetauscht werden. Die Übermittlung erfolgt wie zuvor bei den Messdaten über echtzeitfähige Busse. Die Aktoren steuern dann die Anlage.

Die Controller kommunizieren weiterhin oftmals mit Bedien- und Beobachtungseinrichtungen, mittels derer Benutzer die technische Anlage überwachen und steuern. Derartige Bedien- und Beobachtungseinrichtungen sind oftmals auf einem Server eingesetzt.

Üblicherweise sind alle Controller, mittels derer die Anlage gesteuert wird, vor Ort angeordnet. Diese Anordnung dient insbesondere der Verfügbarkeit und der Erfüllung der Echtzeiterfordernisse. Diese Vorgehensweise ist jedoch aus verschiedenen Gründen von Nachteil.

So muss der Betreiber der Anlage beispielsweise hohe Investitionskosten aufwenden, weil er die gesamte Hardware des Automatisierungssystems kaufen muss, bevor er die Anlage betreiben kann. Diese Hardware ist oftmals dediziert und teuer. Weiterhin ist eine Fernbedienung und Fernwartung entweder nicht möglich oder nur mit zusätzlichen Systemen möglich, die ihrerseits extra konfiguriert und gewartet werden müssen, eigenständige Hardware benötigen und zu inhomogenen Lösungen führen. Weiterhin ist die integrierte Bedienung einer weitverzweigten Anlage von einem einzigen Ort aus oftmals nicht möglich. Auch ergibt sich oftmals keine einheitliche Darstellung von mehreren gleichartigen Anlagen. Weiterhin benötigt der Betreiber der Anlage oftmals eine Vielzahl von Ersatzteilen, um bei Ausfall eines Teils des Automatisierungssystems eine kurze Ausfallzeit gewährleisten zu können.

Anwendungen zur Optimierung und zur präventiven Wartung werden mehr und mehr in der Cloud installiert und von der Cloud aus betrieben. Um ihre Funktionen wahrnehmen zu können, benötigen diese Einheiten Zugriff auf die Daten des Automatisierungssystems. Die Daten müssen speziell selektiert werden und danach über zusätzliche Gateways an die Cloud übermittelt werden. Weiterhin ist es oftmals im Voraus nicht klar, welche Daten genau benötigt werden. Dies wird oftmals erst bei der anwendungsspezifischen Inbetriebnahme und Konfigurierung der Applikationen ersichtlich. Dadurch gestaltet sich die Einbindung der Anwendungen zur Optimierung und zur präventiven Wartung als aufwendig und umständlich. Weiterhin ist die Installation von Updates und Upgrades schwierig, so dass innerhalb verschiedener Automatisierungssysteme der gleichen Anlage oder von Anlage zu Anlage oftmals jeweils eine eigene Softwarekonfiguration und damit im Ergebnis eine große Vielzahl von Softwarekonfigurationen auftritt. Dies vergrößert den Aufwand, der zur Wartung des Automatisierungssystems erforderlich ist, erheblich.

Für manche dieser Probleme sind Lösungen bekannt. In der Praxis ergibt sich aber regelmäßig keine nahtlose Integration in ein verteiltes Steuerungssystem. Vielmehr entstehen heterogene Lösungen.

So sind beispielsweise bereits Lösungen für die Fernbedienung und die Fernwartung verfügbar. Diese Lösungen können von einem beliebigen PC aus betrieben werden, weil die Systeme keine eigene Installation benötigen und auf Webtechnologien basieren. Diese Lösung ist sogar homogen. Für die meisten verteilten Automatisierungssysteme ist eine Fernbedienung jedoch nur mit zusätzlichen Gateways und Desktoplösungen möglich, welche eine Vielzahl von Limitierungen aufweisen.

Um eine einheitliche Darstellung von mehreren gleichartigen Anlagen zu erreichen, werden nahezu immer spezielle Sonderlösungen verwendet. Diese bewirken eine höhere Komplexität. Weiterhin sind oftmals Systembrüche nötig.

In jüngerer Zeit sind virtuelle Controller bekannt und verfügbar geworden. Beispielsweise werden derartige Controller von der Firma Beckhoff angeboten. Derartige Controller könnten prinzipiell auch in der Cloud implementiert werden. Jedoch ist sowohl das Problem des Echtzeit-Datenverkehrs zwischen den Sensoren, Aktoren und dem virtuellen Controller in der Cloud nicht gelöst als auch ist das Problem der Integration eines vollständigen verteilten Automatisierungssystems nicht gelöst.

Im Stand der Technik existieren daher einzelne Lösungsinseln. Es ist aber keine kohärente, nahtlose und homogene Lösung verfügbar.

Die Aufgabe der vorliegenden Erfindung besteht darin, eine derartige kohärente, nahtlose und homogene Lösung zur Verfügung zu stellen.

Die Aufgabe wird durch ein Automatisierungssystem mit den Merkmalen des Anspruchs 1 gelöst. Vorteilhafte Ausgestaltungen des Automatisierungssystems sind Gegenstand der abhängigen Ansprüche 2 bis 9.

Erfindungsgemäß wird ein Automatisierungssystem der eingangs genannten Art dadurch ausgestaltet,
- dass der erste Controller und der zweite Controller virtuelle Controller sind,
- dass der erste Controller in einer physikalischen Einrichtung am Ort der industriellen technischen Anlage implementiert ist und der zweite Controller in einer Recheneinrichtung implementiert ist,
- dass der erste Controller und der zweite Controller über eine Anbindung an ein gemeinsames Rechnernetz miteinander kommunizieren und
- dass der erste und der zweite Controller insofern gleichartig ausgebildet sind, dass die Automatisierungsaufgaben ohne Änderung der jeweiligen Automatisierungsaufgabe sowohl vom ersten als auch vom zweiten Controller abarbeitbar sind.

Die physikalische Einrichtung am Ort der industriellen technischen Anlage kann beispielsweise eine dedizierte Steuereinrichtung sein. Auch kann es sich um einen Industrie-PC handeln. Alternativ kann es sich beispielsweise um einen Prozessor oder dergleichen handeln, der in einem Switch oder einem Router eines LAN (= local area network) oder eines WAN (= wide area network) angeordnet ist. Beide virtuelle Controller können auf Mehrzweckhardware implementiert sein, die nicht speziell zu Steuerungszwecken verwendet werden muss.

Die Aktoren und Sensoren kommunizieren ausnahmslos nicht direkt mit dem zweiten Controller, sondern indirekt über den ersten Controller. Die Kommunikation der Sensoren und Aktoren mit dem ersten Controller kann über übliche, weitverbreitete, echtzeitfähige Kommunikationsmedien erfolgen, beispielsweise PROFIBUS oder PROFINET. Aufgrund der indirekten Übermittlung insbesondere der Messdaten an den zweiten Controller (nämlich über den ersten Controller) können insbesondere die Echtzeiterfordernisse auf einfache Weise gewährleistet werden. Dies gilt, obwohl die üblichen echtzeitfähigen Busprotokolle wie beispielsweise der bereits erwähnte PROFIBUS und das ebenfalls bereits erwähnte PROFINET bei einer Übermittlung der Daten über das Rechnernetz nicht angewendet werden können und übliche Kommunikationsprotokolle für das Rechnernetz in der Regel nicht die benötigte Unterstützung einer Echtzeitübertragung aufweisen.

Aufgrund der erfindungsgemäßen Ausgestaltung können Automatisierungsaufgaben, die mit kleinen Zeitkonstanten ausgeführt werden müssen, sicherheitsrelevant sind oder die Anlage schützen sollen, vom ersten (virtuellen) Controller vor Ort ausgeführt werden, während alle anderen Aufgaben von dem zweiten (virtuellen) Controller, der auf der Recheneinrichtung implementiert ist, ausgeführt werden können. Trotz der weiträumigen Verteilung des verteilten Automatisierungssystems auf (mindestens) einen virtuellen Controller vor Ort und (mindestens) einen virtuellen Controller nicht vor Ort können dadurch zum einen eine hohe Verfügbarkeit und ein deterministisches Echtzeitverhalten bewirkt werden, wobei zum anderen die Nachteile von verteilten Automatisierungssystemen des Standes der Technik überwunden werden können. Aufgrund der Gleichartigkeit der Controller ist aus Sicht des Systems irrelevant, ob der jeweilige Controller vor Ort oder in der Recheneinrichtung (beispielsweise in einer Cloud) implementiert ist. In allen Fällen kann ein deterministisches Echtzeitverhalten garantiert werden.

In aller Regel umfassen die Automatisierungsaufgaben jeweils mehrere Teilaufgaben. Der erste und der zweite Controller ermitteln mittels der Teilaufgaben jeweils mindestens ein Steuerdatum und/oder mindestens ein internes Datum. In einer bevorzugten Ausgestaltung sind die Teilaufgaben ohne Änderung der jeweiligen Teilaufgabe und unabhängig von den jeweils anderen Teilaufgaben dem ersten und dem zweiten Controller zuordenbar. Dadurch kann eine Verteilung der Teilaufgaben auf den ersten und den zweiten Controller nach Bedarf vorgenommen werden. Wenn beispielsweise erkannt wird, dass aufgrund von Verzögerungszeiten bei der Übermittlung von Daten vom zweiten zum ersten virtuellen Controller bei der Steuerung der Anlage unzulässig große Reaktionszeiten bewirkt werden, können derartige Teilaufgaben einzeln und individuell vom zweiten Controller auf den ersten Controller verlagert werden. Umgekehrt können ebenso zeitunkritische Teilaufgaben nach und nach vom ersten Controller auf den zweiten Controller verlagert werden.

Vorzugsweise ist die Zuordnung der Teilaufgaben zum ersten und zum zweiten Controller während der Ausführung der Teilaufgaben durch den ersten und den zweiten Controller dynamisch änderbar. Dadurch können derartige Verlagerungen nicht nur während Stillstandszeiten der industriellen technischen Anlage erfolgen, sondern auch während deren Betrieb. Wenn beispielsweise eine bestimmte Teilaufgabe vom ersten zum zweiten Controller transferiert werden soll, wird zunächst im ersten Controller diese Teilaufgabe - nachfolgend Teilaufgabe A genannt - beibehalten, aber zusätzlich im zweiten Controller eine identische Teilaufgabe - nachfolgend Teilaufgabe B genannt - instanziiert. Danach gibt es mehrere Möglichkeiten. So ist es beispielsweise möglich, dass die Teilaufgabe B zunächst passiv geschaltet wird. Dies bedeutet, dass die Teilaufgabe B zwar dieselben Eingangsdaten erhält wie die Teilaufgabe A, ihre Ausgangsdaten aber nicht verwertet werden. Nach einer gewissen Zeit kann dann ein Aktivieren der Teilaufgabe B erfolgen, während synchron hierzu die Teilaufgabe A passiv geschaltet wird. Danach kann die Teilaufgabe A gelöscht werden. Alternativ hierzu ist es möglich, dass die Teilaufgabe B nach ihrer Instanziierung mit Werten der Teilaufgabe A initialisiert wird und danach sofort die Teilaufgabe B aktiviert wird und die Teilaufgabe A passiv geschaltet wird. Auch hier kann sodann die Teilaufgabe A gelöscht werden. Ein Transfer einer bestimmten Teilaufgabe vom zweiten zum ersten Controller erfolgt in völlig analoger Weise. In manchen Fällen ist es sogar möglich, einen derartigen Transfer auszuführen, während die jeweilige Teilaufgabe gerade nicht benötigt wird. In anderen Fällen kann sich kurzzeitig ein transienter Zustand einstellen, der jedoch - je nach Art der Teilaufgabe - hingenommen werden kann.

Um eine dynamische Änderung der Zuordnung der Teilaufgaben vorzunehmen, ist es beispielsweise möglich, dass eine Überwachungseinrichtung eine Dynamik der Steuerung der industriellen technischen Anlage durch den ersten und den zweiten Controller überwacht und die Zuordnung der Teilaufgaben zum ersten und zum zweiten Controller in Abhängigkeit hiervon dynamisch ändert. Die Überwachungseinrichtung kann eine eigenständige Einrichtung sein. Vorzugsweise ist sie jedoch im ersten oder im zweiten Controller implementiert.

Die Recheneinrichtung befindet sich - im Gegensatz zu der physikalischen Einrichtung, die sich am Ort der industriellen technischen Anlage befindet - vorzugsweise nicht am Ort der industriellen technischen Anlage. Insbesondere kann die Recheneinrichtung, in welcher der zweite virtuelle Controller implementiert ist, sich in einer Cloud befinden.

Vorzugsweise kommunizieren der erste Controller und der zweite Controller über eine im Rechnernetz implementierte peer-to-peer-Verbindung miteinander. Eine derartige Verbindung ist besonders geeignet, um eine leistungsfähige Kommunikation zwischen virtuellen Controllern, von denen einer sich vor Ort und der andere nicht vor Ort befindet, zu erreichen. Gleiches gilt, wenn mehrere Controller vor Ort miteinander und/oder mehrere Controller in einer Cloud miteinander kommunizieren. In allen Fällen ergibt sich ein deterministisches Verhalten mit einer vorhersagbaren maximalen Verzögerungszeit. Das Kommunikationsprotokoll ist weiterhin auch geeignet für eine Kommunikation mit Bedien- und Beobachtungssystemen und anderen Cloud-Diensten.

Vorzugsweise übermittelt der erste Controller die an den zweiten Controller übermittelten Messdaten und/oder die an den zweiten Controller übermittelten internen Daten des ersten Controllers gebündelt. In gleicher Weise übermittelt vorzugsweise auch der zweite Controller den an den ersten Controller übermittelten zweiten Teil der Steuerdaten und/oder die an den ersten Controller übermittelten internen Daten des zweiten Controllers gebündelt. Dadurch wird die erforderliche Bandbreite zur Übermittlung der Daten klein gehalten.

Es ist möglich, dass im Rahmen der gebündelten Übermittlung vom ersten zum zweiten Controller ausschließlich Messdaten übermittelt werden. Es ist jedoch ebenso möglich, dass zusätzlich zu den Messdaten auch interne Daten des ersten Controllers an den zweiten Controller übermittelt werden. In analoger Weise ist es möglich, dass im Rahmen der gebündelten Übermittlung vom zweiten zum ersten Controller ausschließlich Steuerdaten übermittelt werden. Es ist jedoch ebenso möglich, dass zusätzlich zu den Steuerdaten auch interne Daten des zweiten Controllers an den ersten Controller übermittelt werden. In allen Fällen erfolgt jedoch die gebündelte Übermittlung, so dass nur einige wenige Telegramme benötigt werden. Der Overhead ist daher minimal, so dass die Bandbreite für die Datenübertragung gering gehalten wird. Insbesondere hierdurch kann das deterministische Verhalten der Kommunikation zwischen dem ersten Controller vor Ort und dem zweiten Controller beispielsweise in einer Cloud garantiert werden.

Um den Zeitverzug, der durch die peer-to-peer-Kommunikation verursacht wird, möglichst gering zu halten, arbeitet insbesondere der erste Controller vorzugsweise mit einer kleinen Zykluszeit von beispielsweise 20ms. Im Falle einer zyklischen Abarbeitung der Automatisierungsaufgabe synchronisieren vorzugsweise der erste und der zweite Controller die Ausführung ihrer jeweiligen Automatisierungsaufgabe durch eine gegenseitige Abstimmung von Zyklen. Eine andere Lösung ist die Verwendung eines ereignisgetriebenen Ansatzes. In diesem Fall synchronisieren der erste und der zweite Controller die Ausführung ihrer jeweiligen Automatisierungsaufgabe aufgrund gegenseitig abgestimmter Ereignisse. Je nachdem, ob welche dieser beiden Vorgehensweisen ergriffen wird, entspricht die Synchronisierung - zumindest in der Regel - vorzugsweise der IEC 61131 oder der IEC 614999.

Bedien- und Beobachtungssysteme werden - ebenso wie Engineeringsysteme, Diagnosedienste und Archivierungsdienste - vorzugsweise in einer Cloud implementiert. Im Gegensatz zu den Automatisierungsaufgaben, die von dem zweiten Controller abgearbeitet werden, können diese Dienste als sogenannte Mikrodienste implementiert werden, so dass sie nach Bedarf über Cloudmechanismen skaliert werden können. Dadurch kann auf einfache Weise insbesondere eine einheitliche Darstellung von mehreren gleichartigen Anlagen erreicht werden.

Sowohl für den Benutzer des Systems als auch für das System selbst ergibt sich eine einheitliche Darstellung, weil die von den Controllern abgearbeiteten Automatisierungsaufgaben auf einer einheitlichen Softwaredarstellung beruhen. Insbesondere können die Automatisierungsaufgaben mittels ein und desselben Editors erstellt werden und danach den einzelnen Controllern zugeordnet werden. Es ist daher - mit Ausnahme der zu erfüllenden Echtzeiterfordernisse - von untergeordneter Bedeutung, ob bestimmte Teilaufgaben der Automatisierungsaufgaben vom ersten Controller oder vom zweiten Controller ausgeführt werden. Es ergibt sich von außen dieselbe Darstellung und dasselbe Verhalten. Dies gilt prinzipiell für alle Dienste, aber insbesondere für die von den Controllern ausgeführten Automatisierungsaufgaben.

Ein wichtiger Aspekt des Automatisierungssystems ist seine Verfügbarkeit.

Bezüglich des ersten Controllers kann dies beispielsweise dadurch erreicht werden, dass der erste Controller redundant ausgebildet ist. In diesem Fall sind zwei voneinander verschiedene physikalische Einrichtungen am Ort der industriellen technischen Anlage vorhanden, in denen jeweils ein eigener erster Controller virtuell implementiert ist. Die ersten Controller sind in diesem Fall redundant zueinander. Bei Ausfall einer der beiden physikalischen Einrichtungen bzw. eines der beiden ersten Controller kann der andere erste Controller stoßfrei übernehmen. Erforderliche Kommunikationen insbesondere zur gegenseitigen Überwachung der beiden ersten Controller können beispielsweise über Ethernet-Kabel erfolgen.

In analoger Weise kann auch der zweite Controller redundant ausgebildet sein, falls dies erforderlich ist. Je nach den Verfügbarkeitserfordernissen sind hierbei verschiedene Lösungen möglich. Beispielsweise können mehrere zueinander redundante zweite Controller auf verschiedenen Maschinen in derselben Cloudinstanz implementiert sein. Diese Vorgehensweise toleriert einen Ausfall der Maschine, auf welcher der zweite Controller implementiert ist. Alternativ ist es möglich, dass mehrere zueinander redundante zweite Controller in verschiedenen Cloudinstanzen implementiert sind. Diese Vorgehensweise toleriert zusätzlich einen Komplettausfall einer Cloud oder der Kommunikation mit der Cloud, in welcher der zweite Controller implementiert ist. Bei besonders hohen Verfügbarkeitserfordernissen kann die redundante Instanz des zweiten Controllers auch am Ort der industriellen technischen Anlage implementiert sein. Diese Vorgehensweise toleriert den Ausfall jeglicher Kommunikation des ersten Controllers mit Einrichtungen, die nicht am Ort der industriellen technischen Anlage angeordnet sind.

Vorzugsweise ist auch die Kommunikation als solche redundant. Dies erhöht die Betriebssicherheit noch weiter.

Für die Kommunikation zwischen dem ersten Controller und dem zweiten Controller können kommerziell erhältliche Lösungen verwendet werden. Insbesondere sind im Stand der Technik Lösungen bekannt, mittels derer eine garantierte Bandbreite und eine garantierte maximale Verzögerungszeit gewährleistet werden können und weiterhin auch bis zu vier redundante Verbindungen eingerichtet werden können. Derartige Ausgestaltungen erfüllen die Leistungsvorgaben, Echtzeitvorgaben und Verfügbarkeitserfordernisse für nahezu alle verteilten Automatisierungssysteme. Dies gilt insbesondere dann, wenn die besonders zeitkritischen Teilaufgaben vom ersten Controller ausgeführt werden.

Die Konfigurierung der Controller kann vollständig in der Cloud vorgenommen werden. Dies gilt nicht nur für den zweiten Controller, sondern insbesondere auch für den ersten Controller, der in der physikalischen Einrichtung am Ort der industriellen technischen Anlage implementiert ist. Die Konfigurierung der Controller umfasst die Zuteilung der Teilaufgaben, die Konfigurierung des Netzwerks und die Konfigurierung der Hardware-Komponenten des verteilten Automatisierungssystems. Aus Sicht des Engineeringsystems wird nicht zwischen Controllern am Ort der industriellen technischen Anlage und Controllern in der Cloud unterschieden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein verteiltes Automatisierungssystem,
- FIG 2 und 3: Ablaufdiagramme,
- FIG 4 und 5: Controller und Automatisierungsaufgaben und
- FIG 6 bis 10: Ablaufdiagramme.

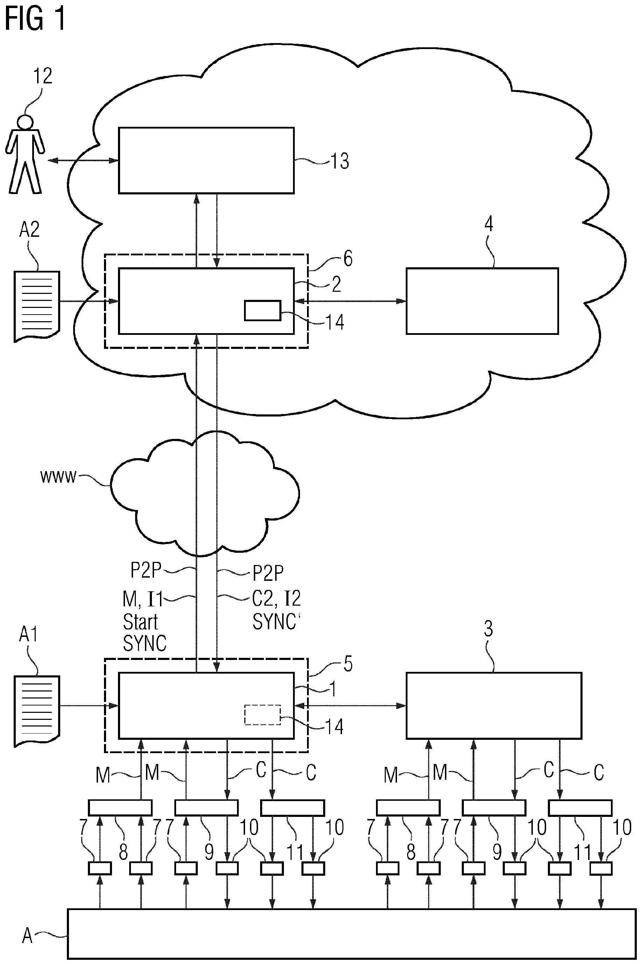

Gemäß FIG 1 ist ein Automatisierungssystem für eine industrielle technische Anlage A als verteiltes Automatisierungssystem ausgebildet. Das Automatisierungssystem weist somit zumindest einen ersten Controller 1 und einen zweiten Controller 2 auf. Zusätzlich können aber auch weitere Controller 3, 4 vorhanden sein. Die Controller 1 bis 4 - insbesondere der erste Controller 1 und der zweite Controller 2 - kommunizieren miteinander. Dies wird aus den weiteren Ausführungen ersichtlich werden.

Der erste Controller 1 ist als virtueller Controller ausgebildet. Er ist in einer physikalischen Einrichtung 5 implementiert. Die physikalische Einrichtung 5 kann beispielsweise als general purpose-Rechner ausgebildet sein, insbesondere als Industrie-PC. Alternativ kann die physikalische Einrichtung 5 beispielsweise Bestandteil eines Switches oder eines Routers eines echtzeitfähigen Ethernets sein. Unabhängig von der Ausgestaltung der physikalischen Einrichtung 5 ist die physikalische Einrichtung 5 jedoch am Ort der industriellen technischen Anlage A angeordnet.

Der zweite Controller 2 ist ebenfalls als virtueller Controller ausgebildet. Im Gegensatz zum ersten Controller 1 ist der zweite Controller 2 in einer Recheneinrichtung 6 implementiert. Die Recheneinrichtung 6 ist eine von der physikalischen Einrichtung 5 verschiedene Einrichtung. Sie befindet sich - zumindest in der Regel - auch an einem anderen Ort, also nicht am Ort der industriellen technischen Anlage A. Insbesondere kann die Recheneinrichtung 6 Bestandteil einer Cloud sein. Die Kommunikation zwischen dem ersten und dem zweiten Controller 1, 2 erfolgt daher entsprechend der Darstellung in FIG 1 über ein Rechnernetz WWW, beispielsweise ein LAN, ein WAN oder das World Wide Web. In aller Regel ist zu diesem Zweck im Rechnernetz WWW eine entsprechende peer-to-peer-Verbindung P2P implementiert.

Cloud Computing als solches ist allgemein bekannt. Beim Cloud Computing stellt ein Anbieter - selbstverständlich gegen Entgelt - Rechenleistung in Paketen zur Verfügung. Beispielsweise stehen dem Anbieter an einem bestimmten Ort auf der Erde insgesamt ca. 10.000 physikalische Rechner zur Verfügung. Jeder physikalische Rechner weist eine Anzahl von Rechnerkernen (CPUs) auf, beispielsweise 16 Rechnerkerne. Die physikalischen Rechner weisen weiterhin jeweils einen Arbeitsspeicher und einen Festplatten- oder vergleichbaren Speicher auf, beispielsweise 128 GB Arbeitsspeicher und 3 TB Festplattenspeicher. Die Rechnerkerne des jeweiligen Rechners teilen sich dynamisch den jeweiligen Arbeitsspeicher und den jeweiligen Festplattenspeicher. Die genannten Zahlenwerte für die Anzahl an Kernen, den Arbeitsspeicher und eventuell auch die Festplattenkapazität sind selbstverständlich nur beispielhaft. Die physikalischen Rechner können beispielsweise in einer Anzahl von 40-Fuß-Standardcontainern angeordnet sein. In mindestens einem weiteren derartigen Standard-Container - nachfolgend zur Unterscheidung von den zuvor genannten StandardContainern als Speichercontainer bezeichnet - ist ein zentraler Datenspeicher angeordnet, der beispielsweise mehrere 100 TB-Datenbank-Cluster umfasst, die jeweils aus einem System von mehreren Festplatten und spezialisierten Datenbank-Rechnern gebildet werden. Auch der mindestens eine Speichercontainer ist an dem genannten Ort angeordnet. Die Standardcontainer und die Speichercontainer können permanent verschlossen bleiben. Sie benötigen lediglich Anschlüsse für die Energieversorgung, die Kühlung und die Kommunikation untereinander sowie mit dem Rechnernetz WWW, in der Regel dem World Wide Web.

Der Anbieter bietet Gruppen von Rechnern an, die üblicherweise als virtuelle Maschinen bezeichnet werden. Beispielsweise kann der Anbieter eine kleine, eine mittlere und eine große virtuelle Maschine anbieten. Eine kleine virtuelle Maschine besteht beispielsweise aus 4 Rechnern. Eine mittlere virtuelle Maschine besteht beispielsweise aus 16 Rechnern.

Eine große virtuelle Maschine besteht beispielsweise aus 64 Rechnern. Auch hier sind die genannten Zahlenwerte rein beispielhaft.

Von einem die virtuellen Maschinen verwaltenden Cloudrechner werden Anforderungen für virtuelle Maschinen entgegengenommen. Die Anforderungen werden von Rechnern gestellt und über das World Wide Web bzw. allgemein das Rechnernetz an den Cloudrechner übermittelt. Der Cloudrechner reserviert daraufhin die jeweils angeforderte Menge an virtuellen Maschinen für die jeweilige Anforderung und übermittelt an den jeweils anfordernden Rechner die entsprechenden Zugriffsdaten, so dass vom jeweiligen Rechner aus auf die entsprechenden virtuellen Maschinen zugegriffen werden kann. Die Reservierung für die jeweilige Anforderung wird beibehalten, bis dem Cloudrechner vom anfordernden Rechner eine Freigabe übermittelt wird.

Die Recheneinrichtung 6 kann insbesondere als derartige virtuelle Maschine ausgebildet sein.

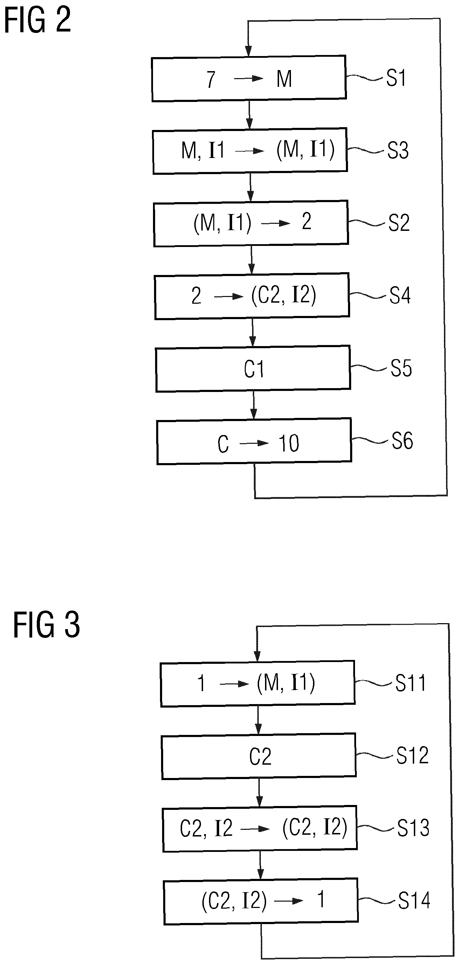

Gemäß FIG 2 - siehe ergänzend FIG 1 - führt der erste Controller 1 zyklisch Schritte S1 bis S6 aus.

Im Schritt S1 nimmt der erste Controller 1 Messdaten M der industriellen technischen Anlage A entgegen. Die Messdaten M werden von Sensoren 7 erfasst. Die Messdaten M können dem ersten Controller 1 über Eingabeeinrichtungen 8, dezentrale Peripherieeinheiten 9 oder von einem weiteren Controller - beispielsweise dem Controller 3 - zugeführt werden. Die Messdaten M können für nahezu beliebige physikalische Größen stehen, beispielsweise Temperaturen, Drücke, elektrische Ströme, Spannungen, Volumenströme und andere mehr. Die Messdaten M sind in FIG 1 und FIG 2 nur mit dem Bezugszeichen M versehen.

Im Schritt S2 übermittelt der erste Controller 1 - jeweils vollständig oder teilweise - die Messdaten M und/oder interne Daten I1 des ersten Controllers 1 an den zweiten Controller 2. Vorzugsweise führt der erste Controller 1 weiterhin vor dem Schritt S2 den Schritt S3 aus. Im Schritt S3 bündelt der erste Controller 1 die Messdaten M und die internen Daten I1 des ersten Controllers 1, soweit sie im Schritt S2 an den zweiten Controller 2 übermittelt werden sollen. Durch die Bündelung wird die erforderliche Bandbreite zur Übermittlung der erforderlichen Daten an den zweiten Controller 2 deutlich reduziert.

Im Schritt S4 nimmt der erste Controller 1 vom zweiten Controller 2 einen Teil C2 von Steuerdaten C entgegen. Dieser Teil C2 von Steuerdaten C wurde zuvor vom zweiten Controller 2 ermittelt. Dies wird aus den Erläuterungen zu FIG 3 noch ersichtlich werden. Der vom zweiten Controller 2 ermittelte Teil C2 von Steuerdaten C wird nachstehend als zweiter Teil C2 von Steuerdaten C bezeichnet, weil er vom zweiten Controller 2 ermittelt wird. Soweit erforderlich, nimmt der erste Controller 1 im Schritt S4 vom zweiten Controller 2 auch - vollständig oder teilweise - interne Daten I2 des zweiten Controllers 2 entgegen.

Im Schritt S5 ermittelt der erste Controller 1 seinen Teil C1 von Steuerdaten C. Der erste Controller 1 ermittelt seinen Teil C1 der Steuerdaten C anhand der Messdaten M und - soweit erforderlich - seiner internen Daten I1 und der internen Daten I2 des zweiten Controllers 2. Der vom ersten Controller 1 ermittelte Teil C1 von Steuerdaten C wird nachstehend als erster Teil C1 von Steuerdaten C bezeichnet, weil er vom ersten Controller 1 ermittelt wird.

Die Steuerdaten C dienen der Beeinflussung von Aktoren 10 der industriellen technischen Anlage A. Der erste Controller 1 gibt daher die Steuerdaten C im Schritt S6 an die Aktoren 10 aus. Die Steuerdaten C können vom ersten Controller 1 über Ausgabeeinrichtungen 11, die dezentralen Peripherieeinheiten 9 oder über einen weiteren Controller - beispielsweise den Controller 3 - an die Aktoren 10 ausgegeben werden. Der guten Ordnung halber sei weiterhin erwähnt, dass die Eingabeeinrichtungen 8 und die Ausgabeeinrichtungen 11 auch kombinierte Eingabe-/Ausgabeeinrichtungen sein können. Denn im Rahmen der obenstehenden Erläuterungen kommt es bezüglich der Eingabeeinrichtungen 8 und der Ausgabeeinrichtungen 11 darauf an, dass überhaupt die jeweilige Funktionalität realisiert wird. Hingegen kommt es nicht darauf an, ob ausschließlich die jeweilige Funktionalität realisiert wird.

Gemäß FIG 3 - siehe ergänzend ebenfalls FIG 1 - führt der zweite Controller 2 zyklisch Schritte S11 bis S14 aus.

Im Schritt S11 nimmt der zweite Controller 2 die Messdaten M und/oder die internen Daten I1 des ersten Controllers 1 entgegen. Der Schritt S11 ist das Pendant zu dem vom ersten Controller 1 ausgeführten Schritt S2.

Im Schritt S12 ermittelt der zweite Controller 2 seinen Teil C2 von Steuerdaten C. Der zweite Controller 2 ermittelt seinen Teil C2 der Steuerdaten C anhand der an ihn übermittelten Messdaten M und - soweit erforderlich - seiner internen Daten I2 und der an ihn übermittelten internen Daten I1 des ersten Controllers 1.

Im Schritt S13 übermittelt der zweite Controller 2 den zweiten Teil C2 von Steuerdaten C an den ersten Controller 1. Soweit erforderlich, übermittelt der zweite Controller 2 im Schritt S13 auch seine internen Daten I2 an den ersten Controller 1. Vorzugsweise führt der zweite Controller 2 weiterhin vor dem Schritt S13 den Schritt S14 aus. Im Schritt S14 bündelt der zweite Controller 2 seinen Teil C2 der Steuerdaten C und seine internen Daten I2, soweit sie im Schritt S13 an den ersten Controller 1 übermittelt werden sollen. Durch die Bündelung wird die erforderliche Bandbreite zur Übermittlung der erforderlichen Daten an den ersten Controller 1 deutlich reduziert.

Soweit erforderlich, kann der zweite Controller 2 weiterhin mit weiteren, ebenfalls in der Cloud implementierten virtuellen Controllern kommunizieren, beispielsweise dem weiteren Controller 4.

Die Abfolge der obenstehend in Verbindung mit FIG 2 erläuterten Schritte S1 bis S6 kann innerhalb gewisser Grenzen variiert werden. Insbesondere ist es möglich, die Schritte S1 bis S6 in der alternativen Reihenfolge S1 - S4 - S5 - (gegebenenfalls) S3 - S2 - S6 auszuführen. Diese Vorgehensweise weist zwar einerseits den Nachteil auf, dass der Controller 2 die Messwerte M erst nach dem Zyklus des Controllers 1 erhält. Im Gegenzug erlangt man jedoch den Vorteil, dass die übermittelten internen Werte I1 des Controllers 1 zu den übermittelten Messwerten M "passen". In analoger Weise kann auch Abfolge der obenstehend in Verbindung mit FIG 3 erläuterten Schritte S11 bis S14 variiert werden.

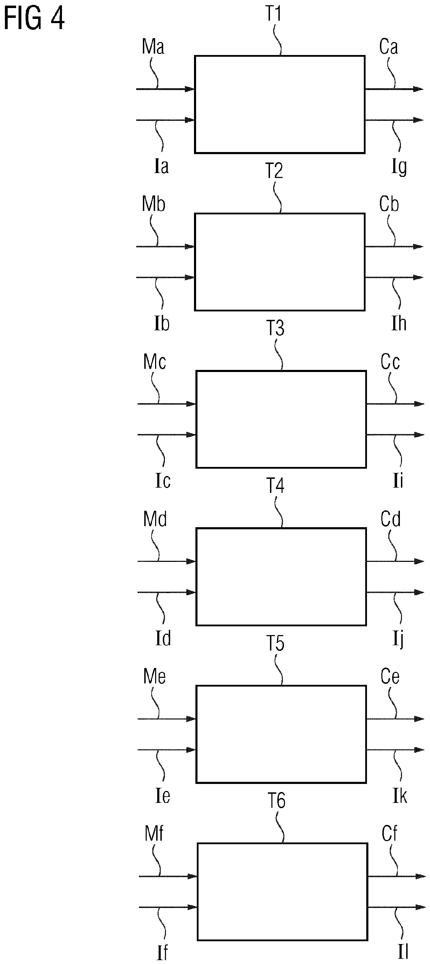

Der erste und der zweite Controller 1, 2 arbeiten zum Ermitteln des ersten und des zweiten Teils C1, C2 der Steuerdaten C entsprechend der Darstellung in FIG 4 eine jeweilige Automatisierungsaufgabe A1, A2 ab. Die Automatisierungsaufgaben A1, A2 sind in Software erstellt. Aufgrund des Umstands, dass der erste und der zweite Controller 1, 2 als virtuelle Controller ausgebildet sind, können die beiden Controller 1, 2 gleichartig ausgebildet sein. Dies bedeutet insbesondere, dass die Automatisierungsaufgaben A1, A2 sowohl vom ersten als auch vom zweiten Controller 1, 2 abarbeitbar sind. Dies kann ohne Änderung der jeweiligen Automatisierungsaufgabe A1, A2 erfolgen. Die jeweilige, einmal programmierte Automatisierungsaufgabe A1, A2 muss also lediglich dem jeweiligen Controller 1, 2 zugeordnet und zugewiesen werden. Hingegen ist es nicht erforderlich, die jeweilige Automatisierungsaufgabe A1, A2 anzupassen, abzuändern oder gar neu zu erstellen.

Die Automatisierungsaufgaben A1, A2 umfassen entsprechend der Darstellung in FIG 4 in der Regel jeweils mehrere Teilaufgaben T1 bis T6. Mittels der Teilaufgaben T1 bis T6 ermitteln der erste und der zweite Controller 1, 2 jeweils mindestens ein Steuerdatum C und/oder mindestens ein internes Datum I.

In FIG 4 sind die Messdaten M zusätzlich mit einem kleinen Buchstaben versehen, um sie voneinander unterscheiden zu können, beispielsweise ein Meßdatum Ma und ein Meßdatum Mb. In analoger Weise sind auch die Steuerdaten C und die internen Daten I der Controller 1, 2 ergänzt, um sie voneinander unterscheiden zu können. Die internen Daten Ia bis If korrespondieren weiterhin inhaltlich mit den internen Daten Ig bis Il. Die internen Daten Ia bis If sind jedoch die momentan verwerteten internen Daten, während die internen Daten Ig bis Il neu ermittelt werden und erst im nächsten Zyklus - dann als interne Daten Ia bis If - verwertet werden. Die Teilaufgaben T1 bis T6 sind in der Regel vordefinierte Funktionsblöcke, die im Rahmen der Erstellung der Automatisierungsaufgaben A1, A2 von einem Programmierer instanziiert und sodann parametriert und verschaltet werden. Die entsprechende Programmierung ist Fachleuten allgemein bekannt.

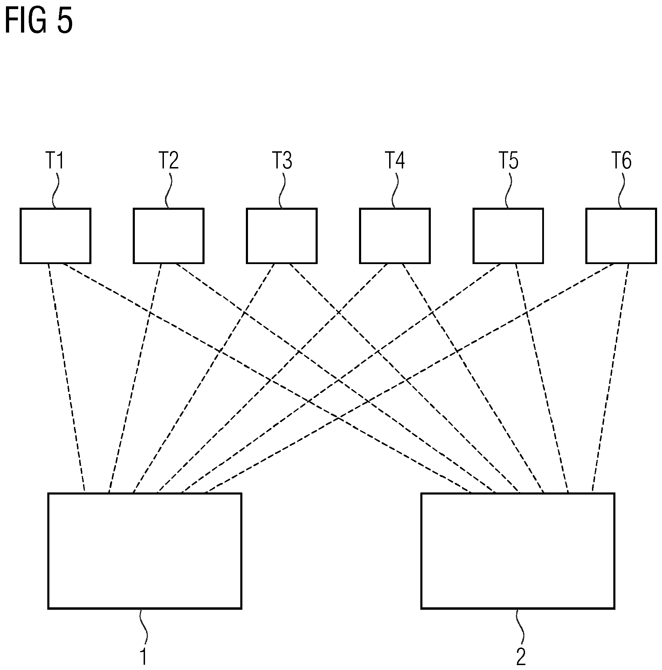

Entsprechend der Darstellung in FIG 4 kann weiterhin beispielsweise die Automatisierungsaufgabe A1 die Teilaufgaben T1 bis T3 umfassen, die Automatisierungsaufgabe A2 die Teilaufgaben T4 bis T6. Die Automatisierungsaufgaben A1, A2 können nach Bedarf mehr Teilaufgaben T1 bis T6 umfassen. Dies stellt sogar den Regelfall dar. Die Automatisierungsaufgaben A1, A2 können im Einzelfall aber auch weniger Teilaufgaben T1 bis T6 umfassen. Entsprechend der Darstellung in FIG 5 können die Teilaufgaben T1 bis T6 einzeln ohne Änderung der jeweiligen Teilaufgabe T1 bis T6 und unabhängig von den jeweils anderen Teilaufgaben T1 bis T6 alternativ dem ersten und dem zweiten Controller 1, 2 zugeordnet werden.

Es ist möglich, dass die Zuordnung der Teilaufgaben T1 bis T6 von einer Bedienperson 12 vorgenommen wird. In diesem Fall kann die Bedienperson 12 beispielsweise entsprechend der Darstellung in FIG 1 die entsprechende Zuordnung dem zweiten Controller 2 vorgeben. Von dort aus werden dann die entsprechenden Informationen weitergeleitet, so dass die entsprechende Zuordnung der Teilaufgaben T1 bis T6 bewirkt wird. Beispielsweise kann die Bedienperson 12 über ein Bedien- und Beobachtungssystem 13 das Verhalten der industriellen technischen Anlage A überwachen und bei Bedarf die Zuordnung der Teilaufgaben T1 bis T6 zu den Controllern 1, 2 ändern. Derartige Änderungen der Zuordnung der Teilaufgaben T1 bis T6 sind auch im laufenden Betrieb möglich, während also das verteilte Automatisierungssystem und damit insbesondere auch die Controller 1, 2 usw. die industrielle technische Anlage A steuern, also während die Controller 1, 2 ihre jeweiligen Teilaufgaben T1 bis T6 ausführen. Derartige Änderungen der Zuordnung sind somit dynamisch möglich.

Alternativ ist es möglich, dass eine Überwachungseinrichtung 14 vorhanden ist. Die Überwachungseinrichtung 14 kann beispielsweise entsprechend der Darstellung in FIG 1 im zweiten Controller 2 implementiert sein. Alternativ könnte sie - in FIG 1 gestrichelt dargestellt - im ersten Controller 1 oder in einem anderen Controller 3, 4 oder an anderer Stelle implementiert sein. In diesem Fall kann die Zuordnung der Teilaufgaben T1 bis T6 zu den Controllern 1, 2 durch die Überwachungseinrichtung 14 vorgenommen werden. Auch hier sind derartige Änderungen der Zuordnung dynamisch möglich.

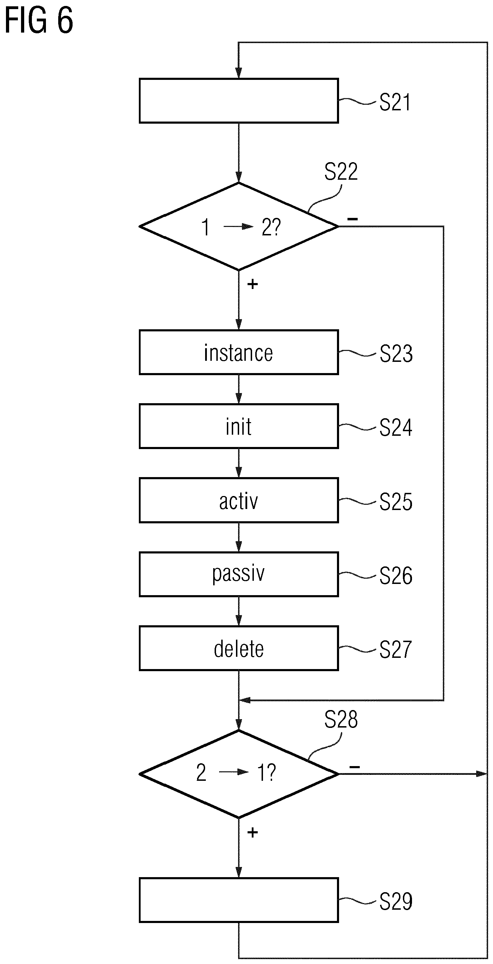

Falls die Überwachungseinrichtung 14 vorhanden ist, kann sie beispielsweise eine dynamische Zuordnung der Teilaufgaben T1 bis T6 entsprechend der in FIG 6 dargestellten Vorgehensweise vornehmen.

Gemäß FIG 6 ermittelt die Überwachungseinrichtung 14 in einem Schritt S21 eine Dynamik der Steuerung der industriellen technischen Anlage A durch den ersten und den zweiten Controller 1, 2. In einem Schritt S22 prüft die Überwachungseinrichtung 14, ob eine Verlagerung von Teilaufgaben T1 bis T6 vom ersten zum zweiten Controller 1, 2 vorgenommen werden soll. Die Prüfung ist von der im Schritt S21 ermittelten Dynamik abhängig.

Sofern eine Verlagerung einer Teilaufgabe T1 bis T6 vorgenommen werden soll, instanziiert die Überwachungseinrichtung 14 in einem Schritt S23 im zweiten Controller 2 die entsprechende Teilaufgabe T1 bis T6. Die neu instanziierte Teilaufgabe ist vorerst aber noch passiv geschaltet, d.h. dass sie zwar ihre Eingangssignale entgegennimmt, die von ihr ermittelten Ausgangssignale aber nur innerhalb der neu instanziierten Teilaufgabe verwertet werden, nicht aber außerhalb der neu instanziierten Teilaufgabe.

In einem Schritt S24 initialisiert die Überwachungseinrichtung 14 - beispielsweise durch Abrufen entsprechender Daten aus dem ersten Controller 1 - die im zweiten Controller 2 neu instanziierte Teilaufgabe. Alternativ kann die Überwachungseinrichtung 14 im Schritt S24 eine Wartezeit abwarten, so dass die neu instanziierte Teilaufgabe sich an die tatsächliche Situation der industriellen technischen Anlage A anpassen kann.

In einem Schritt S25 aktiviert die Überwachungseinrichtung 14 die neu instanziierte Teilaufgabe. Gleichzeitig schaltet sie in einem Schritt S26 die im ersten Controller 1 implementierte Teilaufgabe T1 bis T6 passiv. Danach löscht sie in einem Schritt S27 die im ersten Controller 1 implementierte Teilaufgabe T1 bis T6. Damit ist die Veränderung der Zuordnung abgeschlossen.

In einem Schritt S28 prüft die Überwachungseinrichtung 14, ob eine Verlagerung von Teilaufgaben T1 bis T6 vom zweiten zum ersten Controller 2, 1 vorgenommen werden soll. Auch diese Prüfung ist von der im Schritt S21 ermittelten Dynamik abhängig. Sofern eine Verlagerung einer Teilaufgabe T1 bis T6 vorgenommen werden soll, führt die Überwachungseinrichtung 14 einen Schritt S29 aus. Der Schritt S29 korrespondiert vom Ansatz her mit den Schritten S23 bis S27. Allerdings wird hier die umgekehrte Vorgehensweise ergriffen, so dass eine Teilaufgabe T1 bis T6 vom zweiten in den ersten Controller 2, 1 verlagert wird.

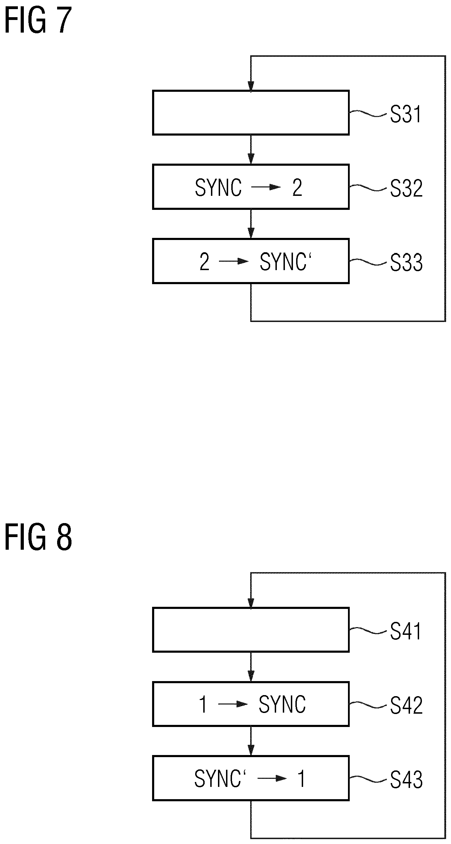

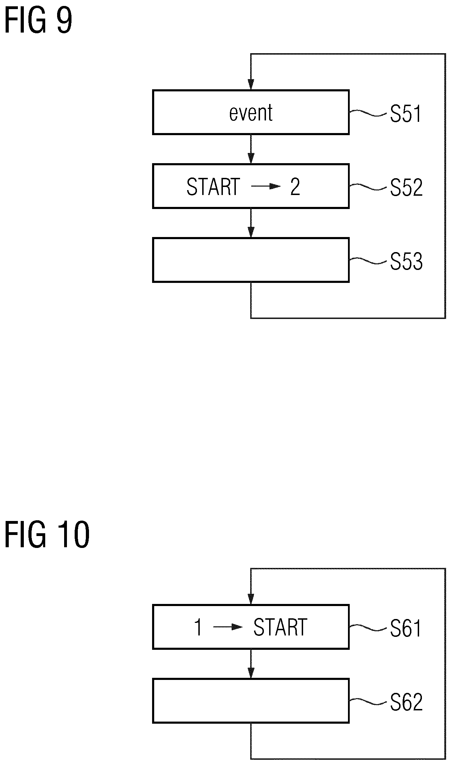

Die Controller 1 bis 4 müssen in aller Regel die Ausführung ihrer jeweiligen Automatisierungsaufgabe A1, A2 relativ zueinander synchronisieren. Hierfür können beispielsweise alternativ die Vorgehensweisen gemäß den FIG 7 und 8 oder die Vorgehensweisen gemäß den FIG 9 und 10 realisiert werden.

Gemäß FIG 7 führt der erste Controller 1 Schritte S31 bis S33 aus. Der Schritt S31 entspricht der Gesamtheit der Schritte S1 bis S6, also der vom ersten Controller 1 ausgeführten Automatisierungsaufgabe A1. Im Schritt S32 übermittelt der erste Controller 1 ein Synchronisationssignal SYNC an den zweiten Controller 2. Im Schritt S33 wartet der erste Controller 1 den Empfang eines weiteren Synchronisierungssignals SYNC' ab. Das weitere Synchronisierungssignal SYNC' wird vom zweiten Controller 2 an den ersten Controller 1 übermittelt.

Hiermit korrespondierend führt der zweite Controller 2 gemäß FIG 8 Schritte S41 bis S43 aus. Der Schritt S41 entspricht der Gesamtheit der Schritte S11 bis S14, also der vom zweiten Controller 2 ausgeführten Automatisierungsaufgabe A2. Im Schritt S42 wartet der zweite Controller 2 den Empfang des Synchronisierungssignals SYNC ab. Im Schritt S43 übermittelt der zweite Controller 2 das Synchronisationssignal SYNC' an den ersten Controller 1.

Im Falle der Vorgehensweise gemäß den FIG 7 und 8 übermittelt also einer der beiden Controller 1, 2 sein Synchronisierungssignal SYNC an den anderen Controller 2, 1 und wartet danach die Übermittlung des weiteren Synchronisierungssignals SYNC' durch den anderen der beiden Controller 1, 2 ab. Dadurch synchronisieren der erste und der zweite Controller 1, 2 die Ausführung ihrer jeweiligen Automatisierungsaufgabe A1, A2 durch eine gegenseitige Abstimmung ihrer Zyklen.

Die Vorgehensweise der FIG 9 und 10 stellt eine Alternative zur Vorgehensweise der FIG 7 und 8 dar.

Gemäß FIG 9 führt der erste Controller 1 Schritte S51 bis S53 aus. Im Schritt S51 wartet der erste Controller 1 den Eintritt eines vorbestimmten Ereignisses ab. Ist das Ereignis eingetreten, übermittelt der erste Controller 1 im Schritt S52 ein Startsignal START an den zweiten Controller 2. Sodann führt der erste Controller 1 einen Schritt S53 aus. Der Schritt S53 korrespondiert 1:1 mit dem Schritt S31 von FIG 7.

Hiermit korrespondierend führt der zweite Controller 2 gemäß FIG 10 Schritte S61 und S62 aus. Im Schritt S61 wartet der zweite Controller 2 den Empfang des Startsignals START ab. Sodann führt der zweite Controller 2 den Schritt S62 aus. Der Schritt S62 korrespondiert 1:1 mit dem Schritt S41 von FIG 8.

Im Falle der Vorgehensweise gemäß den FIG 9 und 10 wartet also einer der beiden Controller 1, 2 ein vorbestimmtes Ereignis ab und übermittelt danach ein Startsignal START an den anderen Controller 2, 1. Dadurch synchronisieren der erste und der zweite Controller 1, 2 die Ausführung ihrer jeweiligen Automatisierungsaufgabe A1, A2 aufgrund gegenseitig abgestimmter Ereignisse.

Zusammengefasst betrifft die vorliegende Erfindung somit folgenden Sachverhalt:
Ein Automatisierungssystem für eine industrielle technische Anlage A weist mehrere virtuelle Controller 1, 2 auf, die miteinander kommunizieren. Ein Controller 1 ist in einer physikalischen Einrichtung 5 am Ort der Anlage A implementiert. Er nimmt Messdaten M der Anlage A entgegen, übermittelt die Messdaten M und/oder eigene interne Daten I1 an den anderen Controller 2 und ermittelt anhand der Messdaten M, seiner internen Daten I1 und/oder interner Daten I2 des anderen Controllers 2 einen Teil C1 von Steuerdaten C für Aktoren 10 zum Beeinflussen der Anlage A. Vom anderen Controller 2 nimmt er zumindest einen zweiten Teil C2 der Steuerdaten C entgegen. Die Steuerdaten C gibt er an die Aktoren 10 aus. Der andere Controller 2 ist in einer Recheneinrichtung 6 implementiert.

Er nimmt vom ersten Controller 1 - soweit übermittelt - die Messdaten M und/oder dessen interne Daten I1 entgegen und ermittelt anhand dieser Daten M, I1 und/oder seiner internen Daten I2 einen zweiten Teil C2 der Steuerdaten C. Zumindest den zweiten Teil C2 der Steuerdaten C übermittelt er an den ersten Controller 1. Die Controller 1, 2 arbeiten zum Ermitteln der Teile C1, C2 der Steuerdaten C in Software erstellte Automatisierungsaufgaben A1, A2 ab. Die Controller 1, 2 kommunizieren über ein Rechnernetz WWW miteinander. Sie sind insofern gleichartig ausgebildet, dass die Automatisierungsaufgaben A1, A2 ohne Änderung der Automatisierungsaufgaben A1, A2 von beiden Controllern 1, 2 abarbeitbar sind.

Die vorliegende Erfindung weist viele Vorteile auf. So ergeben sich beispielsweise für den Endkunden geringere Kosten, weil der zweite Controller 2 außerhalb der industriellen technischen Anlage A implementiert werden kann. Eine Fernbedienung und eine Wartung sind ohne jegliche Restriktionen möglich. Weiterhin ist auch ein einheitlicher Betrieb mehrerer industrieller technischer Anlagen durch einen einzelnen Kunden möglich. Die Verwendung von Cloudtechnologien ermöglicht eine einfache und zentrale Implementierung eines Bedien- und Beobachtungssystems 13 sowie von Diagnose-, Archivierungs- und Engineeringdiensten. Die Anzahl an Ersatzteilen, die der Endkunde vor Ort bereithalten muss, wird deutlich abgesenkt. Dennoch können kurze Reparaturzeiten erreicht werden. Die Verwendung von Standardkomponenten, in denen der erste Controller 1 implementiert ist, senkt diese Kosten noch weiter. Die Datenhaltung als solche (Engineering-Daten, archivierte Daten und aktuelle Daten) ist bereits vollständig in der Cloud verfügbar. Dadurch können Optimierungsanwendungen und Anwendungen zur vorbeugenden Wartung direkt auf sie zugreifen, ohne dass die Steuerung der industriellen technischen Anlage A als solche negativ beeinflusst wird. Die Installierung von Updates und Upgrades gestaltet sich einfacher und kann zentral in der Cloud erfolgen. Auch eine Aktualisierung ist einfacher möglich. Die Systemkomplexität wird reduziert. Auch gestaltet sich das System bruchfrei.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Automatisierungssystem für eine industrielle technische Anlage (A),
- wobei das Automatisierungssystem zumindest einen ersten Controller (1) und einen zweiten Controller (2) aufweist,
- wobei der erste Controller (1) und der zweite Controller (2) miteinander kommunizieren,
- wobei der erste Controller (1)
-- über Eingabeeinrichtungen (8), dezentrale Peripherieeinheiten (9) und/oder weitere Controller (3) von Sensoren (7) erfasste Messdaten (M) der industriellen technischen Anlage (A) entgegennimmt,
-- die Messdaten (M) und/oder interne Daten (I1) des ersten Controllers (1) an den zweiten Controller (2) übermittelt,
-- anhand der Messdaten (M) und/oder der internen Daten (I1) des ersten Controllers (1) und/oder entgegengenommener interner Daten (I2) des zweiten Controllers (2) einen ersten Teil (C1) von Steuerdaten (C) für Aktoren (10) zum Beeinflussen der industriellen technischen Anlage (A) ermittelt,
-- vom zweiten Controller (2) zumindest einen zweiten Teil (C2) der Steuerdaten (C) entgegennimmt und
-- die Steuerdaten (C) über Ausgabeeinrichtungen (11), dezentrale Peripherieeinheiten (9) und/oder weitere Controller (3) an die Aktoren (10) ausgibt,
- wobei der zweite Controller (2)
-- vom ersten Controller (1) die übermittelten Messdaten (M) und/oder die übermittelten internen Daten (I1) des ersten Controllers (1) entgegennimmt,
-- anhand der entgegengenommenen Messdaten (M) und/oder der entgegengenommenen internen Daten (I1) des ersten Controllers (1) und/oder der internen Daten (I2) des zweiten Controllers (2) einen zweiten Teil (C2) der Steuerdaten (C) ermittelt und
-- zumindest den zweiten Teil (C2) der Steuerdaten (C) an den ersten Controller (1) übermittelt,
- wobei der erste und der zweite Controller (1, 2) zum Ermitteln des ersten und des zweiten Teils (C1, C2) der Steuerdaten (C) eine jeweilige in Software erstellte Automatisierungsaufgabe (A1, A2) abarbeiten,
**dadurch gekennzeichnet,**
- **dass** der erste Controller (1) und der zweite Controller (2) virtuelle Controller sind,
- **dass** der erste Controller (1) in einer physikalischen Einrichtung (5) am Ort der industriellen technischen Anlage (A) implementiert ist und der zweite Controller (2) in einer Recheneinrichtung (6) implementiert ist,
- **dass** der erste Controller (1) und der zweite Controller (2) über ein Rechnernetz (WWW) miteinander kommunizieren und
- **dass** der erste und der zweite Controller (1, 2) insofern gleichartig ausgebildet sind, dass die Automatisierungsaufgaben (A1, A2) ohne Änderung der jeweiligen Automatisierungsaufgabe (A1, A2) sowohl vom ersten als auch vom zweiten Controller (1, 2) abarbeitbar sind.

2. Automatisierungssystem nach Anspruch 1,
**dadurch gekennzeichnet,**
- **dass** die Automatisierungsaufgaben (A1, A2) jeweils mehrere Teilaufgaben (T1 bis T6) umfassen,
- **dass** der erste und der zweite Controller (1, 2) mittels der Teilaufgaben (T1 bis T6) jeweils mindestens ein Steuerdatum (C) und/oder mindestens ein internes Datum (I1, I2) ermitteln und
- **dass** die Teilaufgaben (T1 bis T6) ohne Änderung der jeweiligen Teilaufgabe (T1 bis T6) und unabhängig von den jeweils anderen Teilaufgaben (T1 bis T6) dem ersten und dem zweiten Controller (1, 2) zuordenbar sind.

3. Automatisierungssystem nach Anspruch 2,
**dadurch gekennzeichnet,**
**dass** die Zuordnung der Teilaufgaben (T1 bis T6) zum ersten und zum zweiten Controller (1, 2) während der Ausführung der Teilaufgaben (T1 bis T6) durch den ersten und den zweiten Controller (1, 2) dynamisch änderbar ist.

4. Automatisierungssystem nach Anspruch 3,
**dadurch gekennzeichnet,**
**dass** eine Überwachungseinrichtung (14) eine Dynamik der Steuerung der industriellen technischen Anlage (A) durch den ersten und den zweiten Controller (1, 2) überwacht und die Zuordnung der Teilaufgaben (T1 bis T6) zum ersten und zum zweiten Controller (1, 2) in Abhängigkeit hiervon dynamisch ändert.

5. Automatisierungssystem nach Anspruch 4,
**dadurch gekennzeichnet,**
**dass** die Überwachungseinrichtung (14) im ersten oder im zweiten Controller (1, 2) implementiert ist.

6. Automatisierungssystem nach einem der obigen Ansprüche,
**dadurch gekennzeichnet,**
**dass** die Recheneinrichtung (6) sich nicht am Ort der industriellen technischen Anlage (A) befindet.

7. Automatisierungssystem nach einem der obigen Ansprüche,
**dadurch gekennzeichnet,**
**dass** der erste Controller (1) und der zweite Controller (2) über eine im Rechnernetz (WWW) implementierte peer-to-peer-Verbindung (P2P) miteinander kommunizieren.

8. Automatisierungssystem nach einem der obigen Ansprüche,
**dadurch gekennzeichnet,**
- **dass** der erste Controller (1) die an den zweiten Controller (2) übermittelten Messdaten (M) und/oder die an den zweiten Controller (2) übermittelten internen Daten (I1) des ersten Controllers (1) gebündelt übermittelt und
- **dass** der zweite Controller (2) den an den ersten Controller (1) übermittelten zweiten Teil (C2) der Steuerdaten (C) und/oder die an den ersten Controller (1) übermittelten internen Daten (I2) des zweiten Controllers (2) gebündelt übermittelt.

9. Automatisierungssystem nach einem der obigen Ansprüche,
**dadurch gekennzeichnet,**
**dass** der erste und der zweite Controller (1, 2) die Ausführung ihrer jeweiligen Automatisierungsaufgabe (A1, A2) durch eine gegenseitige Abstimmung von Zyklen oder aufgrund gegenseitig abgestimmter Ereignisse synchronisieren.
